# EUROPEAN PATENT APPLICATION

(11) **EP 3 861 855 A1**
(43) Date of publication of application: **11.08.2021**
(21) Application number: 19868546.3
(22) Date of filing: 05.10.2019
(51) Int. Cl.: A01M 1/02, A01M 1/20

(54) **TRAP FOR INSECTS WITH COMPOUND BAIT**

(30) Priority: 05.10.2018 ES 201830968; 04.10.2019 ES 201930866
(71) Applicant: ZENIT Estudio de Diseño e Innovación S.L., 46010 Valencia (ES)
(72) Inventor: BLASCO FEO, Vicente, 46010 Valencia (ES); CASAÑA GINER, Victor, 46010 Valencia (ES)
(74) Representative: Soler Lerma, Santiago
(86) International application number: PCT/ES2019/070671
(87) International publication number: WO 2020/070368

(57) **Abstract**

Insect trap comprising a container divided into at least two internal cavities where the first cavity houses a first solid or semi-solid bait with a toxic substance and the second cavity houses a second much more volatile bait comprising an attractant and volatile substance impregnated in a holder where both baits act in a coordinated manner, since the more volatile substance disperses the attractant substance such as water vapor, causing the insects to enter the trap and easily access the first bait.

## Description

The invention, as the name suggests, refers to an insect trap comprising a compound bait.

The trap is of the type comprising an outer container with a bait inside, where the inside and outside of the container are interconnected so that the insect can enter the container attracted by the bait, eat it and subsequently leave in order, as in the case of ants, to share it in the anthill thus multiplying its effect.

The characteristic of the proposed trap is, on the one hand, that the bait comprises at least two viscous parts that are distinct from what we shall call the first bait and second bait.

Additionally, the container allows for the easy installation of the bait, the separation of the first bait from the second bait until the time of use, and all with increased safety of handling.

The technology segment to which it belongs is that of baited traps for insects.

### Background of the invention

Insect traps comprising a container that contains a bait, where said container has openings connecting its interior and exterior, said windows being suitable for propagating the attractant odor of the bait and, in turn, allowing the entry and exit of insects, are well-known.

Examples of this type of [bait] are, for example, patent EP13192393 of the same applicant or the Spanish ES2619115 also of said applicant.

The two patents cited as examples of the prior art refer to the physical device where the bait is located.

An example of a trap with an attractant and toxic insecticide substance is found in patent US1700517 where a box is centrally located inside another container box, which is closed during transportation, and which contains an element that is attractive to insects such as food or bread. This inner box is surrounded by a powdered insecticide which, as the insects pass by it, is impregnated into their antennae or legs and later, during the routine cleaning of the antennae and legs, ingested thereby. This trap presents difficulties of handling and transportation as it must be opened by the user to uncover said central box containing the attractive substance. Moreover, the use of insecticide powder can cause it to escape through the holes that connect the inside and outside of the trap.

One of the problems associated with bait traps is the difficulty in making the attractive odor disperse properly since the bait must have a high viscosity which, if the trap is tilted or positioned vertically, prevents the bait from flowing and spilling out of the device, making it difficult to disperse the aroma.

Better dispersion occurs by diluting the bait in an excipient that facilitates evaporation, but this presents a number of limitations.

On the one hand, the use of diluted baits that present low or almost liquid viscosity requires using means for preventing spillage, thus limiting the use of the trap. Moreover, the dilution of the bait causes it to lose effectiveness.

Some examples of patents relating to liquid bait traps are patent ES2087310, or ES2185600 where liquid bait is used in combination with other baits.

In both cases the liquid bait is found in a large quantity and in a reservoir from which it is forced out by gravity or capillary action, through, for example, the use of porous wicks. This produces a need for sealing and tearing elements to be incorporated into the trap.

In these patents the liquid bait is located in a reservoir until it is forced out by gravity or capillary action, without mentioning the liquid bait, which has an additional function to facilitating the ingestion of the poison.

That is why today the preference is either for high viscosity baits, which are effective, and easy to transport and use but which create problems when evaporating their effluviums to attract insects, or for baits of low or near-liquid viscosity, usually dilutions, which suffer losses of efficiency due to the decrease in their toxic capacity, in addition to problems concerning transportation and use due to possible spillage.

### Description of the invention

The proposed invention seeks to solve the problems identified by producing a trap that presents a high diffusion of volatile substances but, at the same time, great effectiveness and high security by preventing involuntary contact with the toxic substance of the bait when opening the trap or through improper handling.

For this purpose, a trap is proposed which comprises a container and a bait therein, where the container comprises a base and cover connected to each other by partitions, forming an interior space where the bait is located, which container comprises holes, which we shall call windows, which connect its interior and exterior, allowing the exit of volatile compounds that attract insects, and the entry and exit of the insects.

The base and cover of the container can be moved apart from each other, preferably through means such as threads or ramps in such a way that when moving in relation to each other, for example in a rotational movement, said separation occurs. In the transportation and storage position, the base and cover are in their closest possible position to each other, while in the position of use they are in their furthest possible position from each other.

The internal geometry of the base and the internal geometry of the cover possess complementary partitions which comprise a series of cavities that are closed and separate from each other in the transportation position and communicate with each other in the position of use.

Specifically, at least one first cavity and a second cavity are described where a first bait is positioned in the first cavity and a second bait is positioned in the second cavity.

The first bait comprises a first compound and the second bait comprises a second compound, where the first compound is more viscous than the second compound, either because it is qualitatively different or because the second compound is a dilution of the first compound or because the second compound is water. In any case, this second compound comprises between 50% and 100% water.

The first compound, which is more viscous, comprises a toxic substance.

In one possible embodiment the second compound comprises water and an attractive substance that is not water.

In another possible embodiment, both compounds, the first and the second, comprise toxic substance and attractive substance although the second compound, which is less viscous and more volatile, comprising at least 50% water, on evaporating more easily better disperses said added attracting substance, thereby increasing the attraction of insects.

In one possible embodiment, the second compound comprises the first compound and water in a proportion of at least 50%. As such, the second compound is no more than a dilution in water of the first compound and this because the moisture generated by the presence of water is also attractive to ants, for example.

As a result, when the trap is in use, the first bait and the second bait act in a complementary manner and, since the second compound presents greater volatility, the second bait acts as an attractant, dispersing easily, and once the insects are in the trap, the first bait with the first compound attracts and satiates them as it is more fluid or viscous.

For this purpose, with the trap in use, the first bait and the second bait are adjacent and connected, allowing the insects to move easily from one to the other. In one possible embodiment, communication is facilitated by the superior connection of the first bait and the second bait.

For the purposes of this document we shall call:
The first bait: the part of the bait that presents greater viscosity, and comprises a first compound with a toxic substance that may also include an attractant substance.
The second bait: the part of the bait that presents lower viscosity, and comprises a holder impregnated with a second compound. This second compound comprise watter between u 50%-100%, which is attractant itself, and optionally, another additional attachtant substance. This second compound may also comprise a toxic substance. In one possible embodiment, this second compound is no more than a dilution in water of the first compound.

Communication between the baits: any geometry that facilitates the transit of insects between the first bait and the second bait or the contrary.

Toxic substance: any insecticide or sterilizing substance with insecticide effect. Attractant substance: Any substance, including water, that is attractive to the insects being combatted. Water is attractive in itself, although other additional attractant substances may be incorporated into it to increase its attractiveness.

In one preferred embodiment, the holder of the second bait is made of a porous, fibrous, cellulosic or any other material suitable for impregnation with the second compound. This prevents spillage and facilitates transportation and use.

In one possible embodiment, the second bait surrounds the first bait, and is thus closer to the perimeter windows of the container in such a way that the dispersion of the effluviums is facilitated.

As previously explained, the first bait is housed in a first cavity and the second bait in a second cavity. These cavities are delimited by the internal partitions of the trap, with the upper partitions located under the cover and the lower partitions on the base being complementary to this effect.

As stated above, the trap described comprises:
A container comprising a base and cover connected to each other through intermediate partitions where the base and cover move away from each other.

The base comprises:
A series of partitions on its upper face that laterally define at least one first cavity and one second cavity, where both cavities are open at least upwards.

A perimeter partition.

A series of windows on the perimeter partition.

Lifters, which are the means arranged on the base to force the the cover to lift.

A first bait arranged in the first cavity comprising a first compound.

A second bait arranged in the second cavity where this second bait comprises an impregnatable support and a second compound.

Optionally this second cavity may comprise an operculum or mat of spongy sealing material that enables the sealing of the second cavity where the second bait is located, so that during its transportation and storage this second bait does not lose moisture. Also optionally, the base may comprise, at the top of its perimeter partition, a flexible toothed buffer-like crown to stop the cover from descending when the trap is in the position of use.

In one preferred embodiment the first cavity comprises, in its interior, a series of bait holders, in this case ribs, preferably arranged radially .

The cover comprises:
A series of partitions on its lower side, complementary with the partitions of the base for forming cavities.

Sliders that are the arranged on the cover to enable the raising of the cover and which are complementary with the elements of the base for enabling the raising of the cover. A handle for turning the cover.

We shall call sliders and elevators any complementary geometry of the base and cover that, as its relative position varies, causes the relative lifting of the cover in relation to the base.

We shall call partitions the walls that horizontally divide the inside of the trap whether these partitions are complete, as in the case of the perimeter partitions, or semi-partitions arranged on the base and cover that complement each other, as in the case of the partitions that delimit the first cavity.

In one possible execution the device may optionally comprise a third cavity in the form of a perimeter corridor between the second cavity and the perimeter partitions.

### Brief description of the figures

To facilitate comprehension of the invention, the following figures are presented.

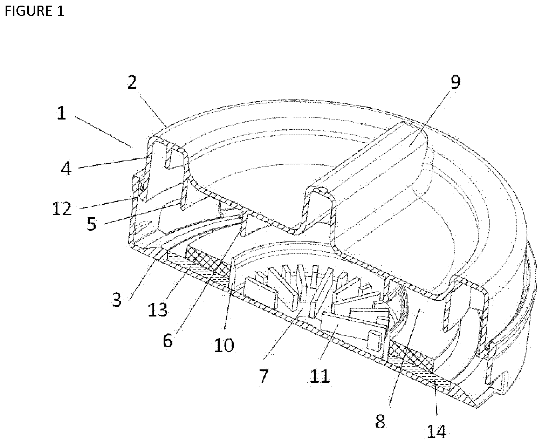

FIGURE 1 shows in cross-section the trap (1) comprising the cover (2) and base (3), the first cavity (7) and the second cavity (8) which in this case are open when the trap is in the position of use.

On the cover (2) there are a series of partitions including an upper perimeter partition (4), an upper central partition (5) an upper inner partition (6). The first cavity (7) is delimited above by the cover (2) and the inner upper partition. The second cavity (8) is delimited above by the cover (2) the central upper partition (5) and the inner upper partition (6).

Also on the cover is the handle (9) which can be used as a grip for the user to rotate the cover relative to the base.

On the base can be observed the inner lower partition (10), the holders (11) arranged radially in the first cavity (7) and the lower perimeter partition (12).

One can also see the holder (13) for the second bait and the operculum (14) against which, in the trap's closed position, the upper central partition (5) will press, closing the second cavity (8).

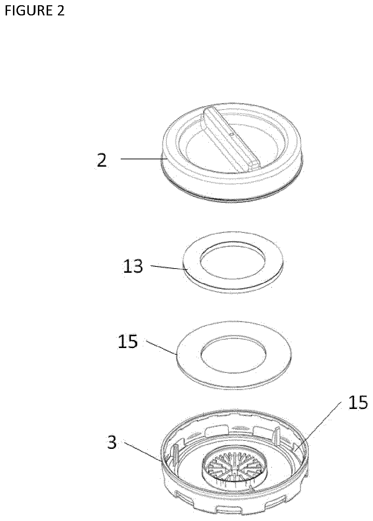

FIGURE 2 shows in exploded from, from an upper perspective, the different components including the cover (2) and the base (3) in which the perimeter windows (15) and lifters (15) are seen, which in this case are ramps that are the means by which the base forces the lifting of the cover.

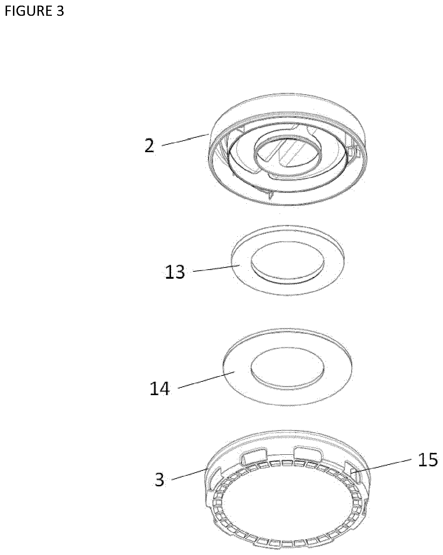

You can also see the holder (13) for the second bait and the operculum (14) FIGURE 3 shows in exploded form, from an upper perspective, the different components including the cover (2) and the base (3) in which the perimeter windows (15), the operculum (14) and the holder (13) are seen.

The perimeter windows are open when the trap is in use and closed during transportation and storage.

At the bottom of the cover can be seen the sliders (16) in this case inclined rails that constitute the means by which the cover is lifted and which are complementary to the lifters at the base.

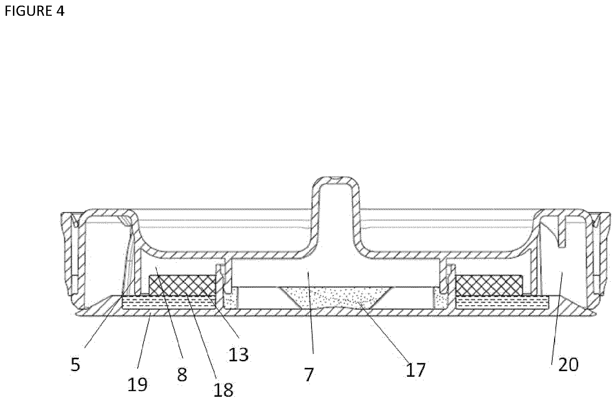

FIGURE 4 shows, in cross-section, the closed trap where the first cavity (7) with the first bait (17) inside is separate and disconnected from the second cavity (8), with the second bait (18) inside, and which comprises the holder (13) and the second compound impregnated therein.

The base and cover are in their closest relative position, with the inner upper partition (6) in contact with the inner lower partition (10) thus closing the first cavity (7).

The second cavity (8) is delimited by the inner partitions that close the first cavity and by the central upper partition (5) that remains in contact with the operculum when the trap is closed (14). In the absence of an operculum, the central upper partition remains in contact with the floor (19) of the base.

Figure 4 also shows the perimeter corridor (20) between the central upper partition (5) and the upper (4) and lower perimeter partitions (12).

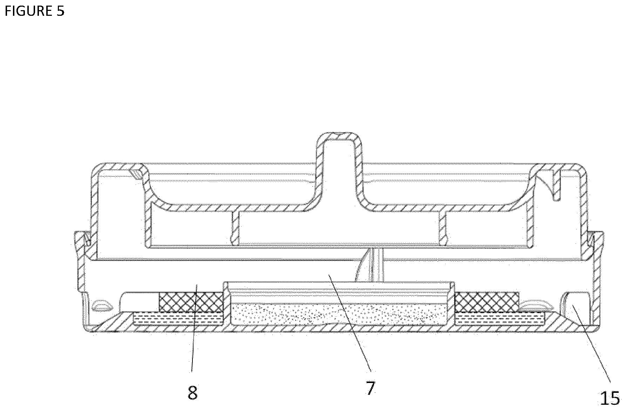

FIGURE 5 shows, in cross-section, the open trap in the position of use. In this position, the first cavity (7) and the second cavity (8) are connected and both are accessible from the outside by opening the windows (15).

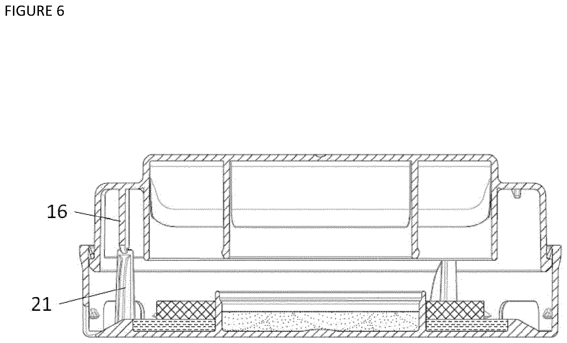

FIGURE 6 shows the assembly, revealing the sliders (16) and lifters (21)

### Description of one form of embodiment of the invention

A form of embodiment of the invention is shown here which is not unique but merely explanatory.

The trap with compound bait comprises a base (3), a cover (4) a lower perimeter partition (12) and an upper perimeter partition (4) that form an interior space divided into a first cavity (7), a second cavity (8) and a perimeter corridor (20).

In the first cavity (7) is housed a first bait (17) which is kept in said first cavity by the action of holders (11) comprising radial ribs. This first bait (17) comprises a first compound.

This first cavity (7) is delimited by the floor (19) of the base (3), the cover (2) the inner upper partition (6) and the inner lower partition (10).

In the position of use, that first cavity is open and connected to the rest of the inner space of the trap. In this position the inner upper partition (6) and the inner lower partition (10) are positioned some distance from each other when the cover is raised.

In the closed position, for transportation and storage, this first cavity remains closed and disconnected from the rest of the inner space of the trap. In this position, with the cover at its lowest position, the inner upper partition (6) and the inner lower partition (10) are in contact with each other.

The second cavity (8) surrounds the first cavity (7) and has an operculum (14) covering its floor. Over the operculum is positioned the holder (13) impregnated with the second compound, thus forming the second bait (18).

The second cavity (7), located on the perimeter of the first cavity, is delimited by the base, the cover, the inner lower partition (6) and inner upper partition (10) and the central upper partition (5), that runs the entire height from the cover (2) to the operculum (14).

In the area between the central upper partition and the perimeter partitions (4) and (12), a third cavity is created, which is a perimeter corridor that houses the sliders (16) and lifters.

The sliders (16) and lifters (21) are complementary ramp-shaped geometries such that, when the cover rotates on itself, this creates a relative forward movement of the lifter on the slider forcing the cover to rise.

Once the cover is raised by the rotation of the cover over the base, an unfolded crown causes the inside of the container to block the reverse motion, thus leaving the cover in a raised position.

The first bait (17), comprising a first compound, is located in the first cavity (7) which comprises holders (11) in the form of radial ribs of different lengths. As such, the bait is secured, making it difficult for an incorrect position of the trap to cause it to be displaced from this first cavity.

The second bait is positioned in the second cavity and surrounds the first bait. This second bait comprises a holder (13) and a second compound impregnated therein and is positioned on an operculum (14) that is wider than the support, where a flap on the perimeter of the operculum adapted to receive the central upper partition (5) protrudes from the area occupied by the bait.

The first compound and the second compound comprise the same substances although the second compound is diluted in water.

To facilitate the handling of the trap, a handle is provided on the upper face of the cover.

As can be perceived from all the preceding content, the trap is designed to be used by any insect capable of entering it, and the height and diameter can be dimensioned for virtually any small insect.

However, one preferred embodiment consists of using these traps to capture insects using a first food bait positioned in the center in a solid or semi-solid state (gel or paste) and using a second attractant bait in the form of a ring of absorbent material impregnated with a second compound with at least 50% water which supplies water and water vapor to the ants or cockroaches.

We have found that this type of double bait trap allows for the use of very different baits both in form and capacity to attract, which is to say: regardless of the nature of the first compound, the existence of a water vapor source emanating from the second bait surprisingly increases the immediate attraction, ingestion and, thus, effectiveness of the trap.

In reality this type of bait combination is suitable as long as the trap has different areas of bait types; it is not essential that the trap have the arrangement presented in this document in some of its variants: in the light of this document, it would be obvious to a person skilled in the art that a circular or cylindrical geometry is not strictly necessary.

One of the preferred applications of the present invention concerns its use in the control of ants, termites, bed bugs and cockroaches.

In the case of ants, the insecticide effect of the first bait preferably causes delayed mortality (from minutes to hours) so that the ants can poison the rest of the colony by trophallaxis - the exchange of food between insects of the same species orally or anally, in the case of ants, mouth-to-mouth - and eventually, kill the queen ant.

We have demonstrated that regardless of the specific formula of the first compound used in the first bait in the center, if the second bait is able to provide water (partially in the form of steam in a way that increases the radius of attraction) to ants or cockroaches, the attractant power of the trap until the second bait dries out, is significantly increased. This form of combined attraction is novel inasmuch as two objectives are achieved simultaneously:
Achieving the attraction and ingestion of the first bait, which is persistent over time, inasmuch as it contains dry solids that are able to attract and be ingested and, in a novel manner,

Achieving immediate attraction thanks to the action of a second bait comprising a hydrated medium with a second compound with at least 50% water that allows the water vapor to exert a high level of attraction from the moment the trap is opened.

There are ant and cockroach traps on the market containing one or the other bait, but under no circumstances are both types of bait found in the same device. Nor is it known to inventors that this combined mechanism has results as surprising as those we have discovered.

In particular, at least in the case of ants and cockroaches, water itself is a substance that is both attractant and volatile (effluvium), in addition to being a constituent of the natural food of ants and cockroaches, which fact is well known to experts in entomology. That is why, according to the interpretation of other paragraphs of this document, water cannot be excluded.

In this situation, we surprisingly found that a second bait with a high water content has an increased attractant capacity, and that additionally, since it serves as a first way of attracting ants to the second bait, it causes the ants and cockroaches to feed in larger quantities and more quickly from the first bait that will always contain a toxic substance. With regard to the differences between ants (or termites) and cockroaches, we note that in ants it is advisable, for the most effective elimination of a colony, for trophallaxis to cause the insecticide poisoning of as many ants as possible, although there are certain uses where this is not necessary: as a non-limiting example, such as when it is sought to eliminate ants in an area without seeking to exterminate the entire anthill from which they derive. In this sense, there are commercial traps that have this immediate elimination effect, in particular those that contain pyrethroids, as an example, we have observed that it occurs in the laboratory if it is used a bait containing 1 R-trans-phenothrin at 0.093% in p/p with respect to the total weight of the bait.

In this case, ants begin to show signs of intoxication almost immediately after ingestion, with mortality at two hours above 50% (in wild Lasius niger raised in the laboratory), in standard trials according to a test guide of the Biocidal Products Directive (BPR) of the European Union (document incorporated here in full as a reference, in particular Guidance on the BPR: Volume II Efficacy - Assessment and Evaluation (Parts B+C), pages ISBN: 978-92-9020-502-9. By contrast, in the case of cockroaches, which are not social insects, immediate death poses no problem and may even be desirable for assessing its effectiveness in the field. Similar cases to cockroaches include bed bugs, clothes moths and other insects and mites of economic and health-related importance where the type of trap described in the present invention can be used. Entomologists can easily determine, taking into account the biology of the pest, whether the use of this trap is appropriate or not.

Moreover, we have observed that if the second bait contains a certain amount of insecticide, in addition to water, this area of the trap can also be used in the event that insects that manage to feed on this second bait are satiated and do not go on to feed on the first bait.

Optionally, to improve their attractive power, the first and second compounds, and thus the first and second baits, can incorporate added attractant substances that may be sugars, preferably monosaccharides and disaccharides, as well as easy-to-obtain products that contain them.

## Claims

1. INSECT TRAP WITH COMPOUND BAIT of the type which comprises a container inside which the bait is deposited, which container comprises a base and a cover that, in the position of use, presents open perimeter windows that connect the interior and exterior thereof, allowing the entry and exit of insects as well as the dispersion of the volatile substances for attracting the insects, **characterized by** comprising:
Sliders (16) and lifters (21)
A series of partitions that divide the inside of the container into cavities, which cavities are connected to each other when the trap is in use and disconnected during transportation and storage, containing a first cavity (7) where the first bait is housed (11), comprising a first compound comprising a toxic substance, and a second cavity (8), where the second bait is housed (18), comprising a holder (13) and a second compound impregnated therein, where said second compound is more volatile than the first compound and comprises water.

2. INSECT TRAP WITH COMPOUND BAIT according to claim 1 wherein the first compound also comprises an additional attractant substance.

3. INSECT TRAP WITH COMPOUND BAIT according to claim 1 whereby the second compound also comprises a toxic substance.

4. INSECT TRAP WITH COMPOUND BAIT according to claim 1 **characterized by** the second compound comprising, in addition to water, an additional attractant substance.

5. INSECT TRAP WITH COMPOUND BAIT according to claim 1 **characterized by** the first cavity (7) comprising holders (11).

6. INSECT TRAP WITH COMPOUND BAIT according to claim 5 **characterized by** the holders comprising ribs arranged radially inside the first cavity.

7. INSECT TRAP WITH COMPOUND BAIT according to claim 1 **characterized by** the first cavity (7) being in the central position and the second cavity surrounding the perimeter of the first cavity.

8. INSECT TRAP WITH COMPOUND BAIT according to claim 1 **characterized by** the cover comprising, on its lower face, an inner upper partition (6), a central upper partition (5) and a upper perimeter partition (4).

9. INSECT TRAP WITH COMPOUND BAIT according to claim 1 **characterized by** the base comprising, on its upper face, an inner lower partition (10) complementary with the inner upper partition (6), and a lower perimeter partition (12).

10. INSECT TRAP WITH COMPOSED BAIT according to claim 1 **characterized by** comprising a third cavity forming a perimeter corridor between the central upper partition (5) and the lower perimeter partition (12).

11. INSECT TRAP WITH COMPOUND BAIT according to claim 1 **characterized by** the sliders and lifters being arranged in the third cavity.

12. INSECT TRAP WITH COMPOUND BAIT according to claim 1 **characterized by**
(i) the first bait comprising at least one toxic substance with at least one monosaccharide or disaccharide sugar
(ii) the second bait (18) comprising at least water embedded in the holder (13)

13. INSECT TRAP WITH COMPOUND BAIT according to claim 12 **characterized by** the second bait (18) also comprising a monosaccharide or disaccharide sugar.

14. INSECT TRAP WITH COMPOUND BAIT according to claim 12 **characterized by** the second bait (18) also comprising an insecticide

15. INSECT TRAP WITH COMPOUND BAIT according to claim 12 **characterized by** the second bait (18) being embedded in a dilution of water from the first bait 12 (i).
